# EUROPEAN PATENT APPLICATION

(11) **EP 4 488 853 A1**
(43) Date of publication of application: **08.01.2025**
(21) Application number: 23778009.3
(22) Date of filing: 23.03.2023
(51) Int. Cl.: G06F 16/9535, H04N 21/2187, H04N 21/466

(54) **PAGE DISPLAY METHOD AND APPARATUS, DEVICE, COMPUTER READABLE STORAGE MEDIUM AND PRODUCT**

(30) Priority: 31.03.2022 CN 202210346020
(71) Applicant: Beijing Zitiao Network Technology Co., Ltd., Beijing 100190 (CN)
(72) Inventor: ZHUO, Yaqin, Beijing 100028 (CN); SUN, Guangtong, Beijing 100028 (CN); LI, Hui, Beijing 100028 (CN)
(74) Representative: Dentons UK and Middle East LLP
(86) International application number: PCT/CN2023/083451
(87) International publication number: WO 2023/185640

(57) **Abstract**

Embodiments of the present disclosure provide a method, apparatus, electronic device, computer readable storage medium, computer program product and computer product for displaying a page. The method comprises: displaying a livestream control associated with at least one resource information corresponding to a target object in a target object display page; and in response to triggering by a user on the livestream control, displaying a live media streaming display interface corresponding to the resource information, where a live media streaming comprises at least one live media content associated with the resource information and/or the target object.

## Description

### CROSS REFERENCE

This application claims priority to Chinese Patent Application No. 202210346020.9, filed with the Chinese Patent Office on March 31, 2022 and entitled "METHOD, APPARATUS, DEVICE, COMPUTER READABLE STORAGE MEDIUM AND PRODUCT FOR DISPLAYING A PAGE", the disclosures of which are incorporated herein by reference in their entities.

### FIELD

Embodiments of the present disclosure relate to the field of interface interaction technology, and in particular, to a method, apparatus, electronic device, computer-readable storage medium, computer program product and computer program for displaying a page.

### BACKGROUND

In order to facilitate users' understanding of various objects, such as offline merchant objects, existing information platforms generally provide basic information of objects to them.

However, recommended content and recommendation modes of existing object recommendation methods are rather monotonous, and the user cannot have an intuitive understanding of objects from the recommended content, thereby leading to poor user experience.

### SUMMARY

Embodiments of the present disclosure provide a method, an apparatus, an electronic device, a computer readable storage medium, a computer program product and a computer program for displaying a page.

In a first aspect, an embodiment of the present disclosure provides a method for displaying a page, comprising:
displaying a livestream control associated with at least one resource information corresponding to a target object in a target object display page; and
in response to triggering by a user on the livestream control, displaying a live media streaming display interface corresponding to the resource information, where a live media streaming comprises at least one live media content associated with the resource information and/or the target object.

In a second aspect, an embodiment of the present disclosure provides an apparatus for displaying a page, comprising:
a display module configured for displaying a livestream control associated with at least one resource information corresponding to a target object in a target object display page; and
a processing module configured for in response to triggering by a user on the livestream control, displaying a live media streaming display interface corresponding to the resource information, where the live media streaming comprises at least one live media content associated with the resource information and/or the target object.

In a third aspect, an embodiment of the present disclosure provides an electronic device, comprising: a processor and a memory;
the memory storing computer-executed instructions;
the processor executing the computer-executed instructions stored in the memory to cause the at least one processor to perform a method for displaying a page according to the first aspect and various possible designs of the first aspect.

In a fourth aspect, an embodiment of the present disclosure provides a computer readable storage medium, storing computer-executed instructions thereon. The computer-executed instructions, when executed by a processor, implement a method for displaying a page according to the first aspect and various possible designs of the first aspect.

In a fifth aspect, an embodiment of the present disclosure provides a computer program product, comprising a computer program which, when executed by a processor, implements a method for displaying a page according to the first aspect and various possible designs of the first aspect.

In a sixth aspect, an embodiment of the present disclosure provides a computer program which, when executed by a processor, implements a method for displaying a page according to the first aspect and various possible designs of the first aspect.

### BRIEF DESCRIPTION OF THE DRAWINGS

To describe the technical solutions in the embodiments of the present disclosure or the related art more clearly, a brief introduction is presented below to the accompanying drawings to be used in the description of the embodiments or the related art, Apparently, the accompanying drawings in the following description show some embodiments of the present disclosure, and for those of ordinary skill in the art, they may further derive other drawings according to these drawings without creative efforts.
FIG. 1 is a schematic flowchart of a method for displaying a page provided by an embodiment of the present disclosure.
FIG. 2 is a schematic diagram of interface interaction provided by an embodiment of the present disclosure.
FIG. 3 is a schematic flowchart of a method for displaying a page provided by another embodiment of the present disclosure.
FIG. 4 is a schematic diagram of another interface interaction provided by an embodiment of the present disclosure.
FIG. 5 is a schematic diagram of a display interface provided by an embodiment of the present disclosure.
FIG. 6 is a schematic diagram of further interface interaction provided by an embodiment of the present disclosure.
FIG. 7 is a schematic diagram of still further interface interaction provided by an embodiment of the present disclosure.
FIG. 8 is a schematic diagram of another display interface provided by an embodiment of the present disclosure.
FIG. 9 is a schematic diagram of still further interface interaction provided by an embodiment of the present disclosure.
FIG. 10 is a schematic flowchart of another method for displaying a page provided by an embodiment of the present disclosure.
FIG. 11 is a schematic diagram of still further interface interaction provided by an embodiment of the present disclosure.
FIG. 12 is a structural schematic diagram of an apparatus for displaying a page provided by an embodiment of the present disclosure.
FIG. 13 is a schematic structural diagram of an electronic device provided by an embodiment of the present disclosure.

### DETAILED DESCRIPTION

In order to make objects, technical solutions and advantages of the embodiments of the present disclosure more apparent, a clear and complete description is presented below to the technical solutions in the embodiments of the present disclosure in conjunction with the accompanying drawings in the embodiments. Obviously, the embodiments to be described are only a part but not all of the embodiments of the present disclosure. All other embodiments obtained by those of ordinary skill in the art based on the embodiments of the present disclosure without creative efforts shall belong to the protection scope of the present disclosure.

In view of the above technical problem that the recommended content and the recommendation mode of the existing object recommendation method are relatively monotonous, the present disclosure provides a method for displaying a page, apparatus, device, computer readable storage medium, computer program product, and computer program.

It should be noted that the method for displaying a page, apparatus, device, computer readable storage medium, computer program product, and computer program provided in the present disclosure may be applied in various scenarios of target object display .

Existing target object recommending methods generally display basic information, such as an address, a review, and a livestream photo of a target object, in a target object display page, with less content being displayed, so that the user cannot obtain a further understanding of the target object through the target object display page.

While addressing the above technical problem, the inventor has found through research that, in order to enrich display content in the target object display page and enable the user to understand the target object more intuitively, at least one resource information corresponding to the target object may be displayed on the target object display page, and a livestream control associated with the at least one resource information may be displayed, so that the user can watch live media streaming content corresponding to the resource information through triggering on the livestream control. Therefore, the user can obtain more display content from the target object display page and increase the understanding of the target object.

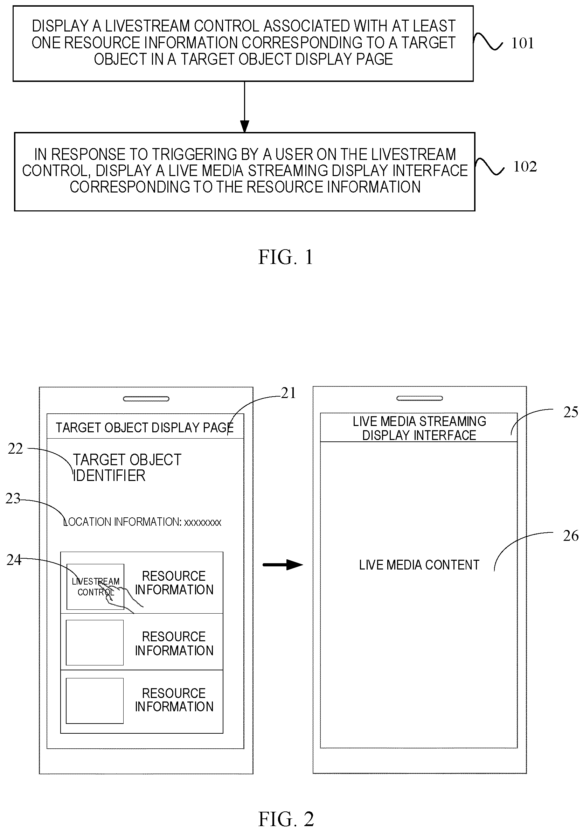

FIG. 1 is a schematic flowchart of a method for displaying a page provided by an embodiment of the present disclosure. As shown in FIG. 1, the method comprises:

In Step 101: a livestream control associated with at least one resource information corresponding to a target object is displayed on a target object display page.

The execution body of this embodiment is an apparatus for displaying a page, which may be coupled to a terminal device and display a page according to triggering of a user on the terminal device. Optionally, the apparatus for displaying a page may also be coupled to a server that is in communication connection with a terminal device, so that triggering of a user on the terminal device can be obtained, and page display processing is performed according to the trigger operation.

The target object may be a target point of interest, such as a store, a mall, or a scenic spot. In this implementation, only basic information of the target object is generally displayed on the existing target object display page, display content is relatively monotonous, and the user cannot have a comprehensive understanding of the target object through the target object display page. Therefore, in order to enrich the display content of the target object display page, a livestream control associated with at least one resource information corresponding to the target object may be displayed on the target object display page. The target object display page may specifically be a detail display page corresponding to the target object, or a playback page of media content associated with the target object, or a target object list display page, which is not limited in the present disclosure.

In practical applications, for example, the target object may be restaurant A, and the resource information may be a group purchase package corresponding to restaurant A, or may be a coupon corresponding to restaurant A, and the like.

In Step 102, in response to triggering of a user on the livestream control, a live media streaming display interface corresponding to the resource information is displayed, where the live media streaming comprises at least one live media content associated with the resource information and/or the target object.

In this implementation, the user may perform triggering on the livestream control according to actual needs, where the triggering includes but is not limited to clicking, double-clicking, long-pressing, dragging, and other operations. In response to triggering by the user on the livestream control, it is possible to redirect from the target object display page to a live media streaming display interface corresponding to the resource information, where the live media streaming comprises at least one live media content associated with the resource information and/or the target object. The user can watch the live media content within the live media streaming display interface.

The live media streaming comprises at least one live media content associated with the resource information and/or the target object. Before displaying a live media streaming display interface corresponding to the resource information, the method further comprises: determining at least one live media content associated with the resource information and/or the target object; generating the live media streaming by ranking the at least one live media content based on an attribute of the live media content and/or the association between the live media content and the user. Specifically, if the live media content comprises the resource information and/or information of the target object, and/or the user may interact with the resource information and/or the target object based on the live media content, it may be determined that the live media content is associated with the resource information and/or the target object. As an example, when ranking the at least one live media content, live media content that has a larger number of livestream viewers or is highly associated with the user may be ranked at a relatively top position.

Optionally, if the user clicks the livestream control, the at least one live media content corresponding to the resource information can further include resource information or playback of the live media content corresponding to the target object.

There may be at least one resource information corresponding to the target object. Optionally, the livestream control may correspond to the resource information on a one-to-one basis, that is, a plurality of livestream controls may be displayed on the target object display page. A user may perform selection on a livestream control according to actual needs, and according to the selection, related live media content of resource information corresponding to the livestream control selected by the user is played. Optionally, a playback control corresponding to a plurality of resource information may be displayed on the target object display page. In response to triggering by the user on the livestream control, a live media streaming display interface can be redirected to, where the live media streaming display interface comprises at least one live media content associated with resource information or a target object.

FIG. 2 is a schematic diagram of interface interaction provided by an embodiment of the present disclosure. As shown in FIG. 2, an identifier 22 corresponding to a target object, address information 23, and a livestream control 24 corresponding to at least one resource information may be displayed on a target object display page 21. The user can trigger the livestream control 24, and in response to triggering by the user, a live media streaming display interface 25 may be redirected to, where live media content 26 associated with the target object may be displayed in the live media streaming display interface 25.

Optionally, on the basis of the foregoing embodiment, the livestream control comprises a static icon and/or a dynamic icon;
where a resource information picture and/or a livestream content screenshot corresponding to the target object is displayed on the static icon; at least part of the livestream content corresponding to the target object is displayed on the dynamic icon.

In this embodiment, in order to enable the user to understand the live media content corresponding to the livestream control more intuitively, the livestream control may include a static icon and/or a dynamic icon. When the livestream control is a static icon, a resource information picture and/or a livestream content screenshot corresponding to the target object may be displayed on the static icon. Alternatively, when the livestream control is a dynamic icon, at least part of the livestream content corresponding to the target object may be specifically displayed on the dynamic icon.

Thus, the user can intuitively determine the resource information corresponding to the livestream control and/or the specific condition of the livestream content from the livestream control.

According to the method for displaying a page provided in this embodiment, a livestream control associated with at least one resource information corresponding to a target object is displayed on a target object display page, so that a live media streaming display interface corresponding to the resource information can be displayed according to triggering of a user on a livestream space. The diversity of display content in the target object display page is improved, and the trigger flow of live media streaming can be simplified, so that the user obtains more display content on the target object display page and increases the understanding of the target object.

Further, on the basis of any of the above embodiments, Step 101 comprises:
obtaining type information corresponding to a predetermined page, and displaying a livestream control of at least one resource information corresponding to the target object in the target object display page in a display mode corresponding to the type information, where the target object display page is redirected to based on triggering by a user on an entry of a target object display page in the predetermined page.

In this embodiment, the user may redirect to the target object display page from a different predetermined page, and different display modes of the livestream control may be used for different predetermined pages. Specifically, the predetermined page may include an entry of a target object display page. In response to triggering by the user on the entry of the target object display page in the predetermined page, the user may redirect to the target object display page, and obtain type information corresponding to the predetermined page. According to the type information corresponding to the predetermined page, the livestream control of the at least one resource information corresponding to the target object can be displayed on the target object display page in a display mode corresponding to the type information.

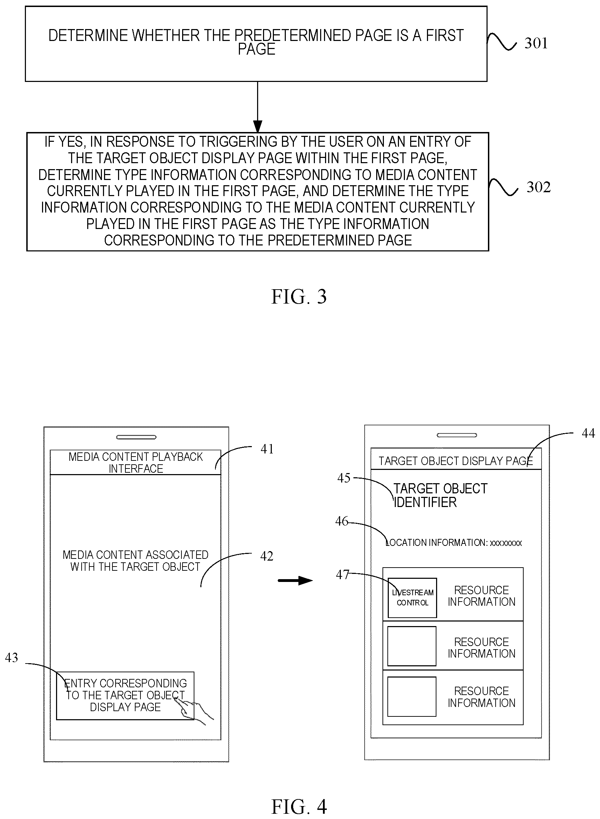

FIG. 3 is a schematic flowchart of a method for displaying a page provided by another embodiment of the present disclosure. On the basis of any of the foregoing embodiments, as shown in FIG. 3, the obtaining type information corresponding to a predetermined page comprises:

In Step 301, it is judged whether the predetermined page is a first page, where the first page is a media content play interface.

In Step 302, if yes, in response to triggering performed by a user on an entry of the target object display page in the first page, type information corresponding to media content currently played in the first page is determined, and the type information corresponding to the media content currently played in the first page is determined as the type information corresponding to the predetermined page.

In this implementation, first, it may be judged whether the predetermined page is a first page, where the first page is a media content play interface, and media content associated with a target object may be displayed on the media content play interface.

If the predetermined page is a first page, in response to triggering performed by a user on an entry of the target object display page in the first page, the type information corresponding to the media content currently played on the media content play interface may be further detected, and the type information corresponding to the media content currently played on the first page is determined as the type information corresponding to the predetermined page.

continuing the foregoing example, media content associated with restaurant A may be currently played on the first page, where the media content may be promotion media content posted by restaurant A officially or a user specified by restaurant A, and may also be life sharing content posted by common diners. With respect to different types of media content, the predetermined page may be divided into different types of information, so that different livestream controls can be displayed for different types of information, thereby improving the display diversity of the livestream control.

FIG. 4 is a schematic diagram of further interface interaction provided by an embodiment of the present disclosure. As shown in FIG. 4, the first page may specifically be a media content play interface 41. Media content 42 associated with a target object and an entry 43 corresponding to a target object display page may be displayed in the media content play interface 41. In response to triggering by the user on the entry 43, a target object display page 44 is redirected to, where an identifier 45 corresponding to the target object, address information 46, and a livestream control 47 corresponding to at least one resource information may be displayed on the target object display page 44.

Further, on the basis of any of the foregoing embodiments, the determining type information corresponding to media content currently played in the first page in Step 302 comprises:
obtaining the media content currently played and associated information corresponding to the media content, where the associated information comprises at least one of interaction information and poster information of the media content;
detecting whether the media content and the associated information corresponding to the media content satisfy a predetermined condition;
if yes, determining that the type information corresponding to the media content is a first type; and
if not, determining that the type information corresponding to the media content is a second type.

In this embodiment, to identify the type information corresponding to the media content, the media content currently played and the associated information corresponding to the media content may be obtained first. The associated information includes at least one of interaction information and poster information of the media content. The interaction information may specifically be comment information of the media content. The publisher information includes, but is not limited to, a poster identity.

It is detected whether the media content and the associated information corresponding to the media content satisfy a predetermined condition. If yes, it may be determined that the type information corresponding to the media content is a first type. Accordingly, it may be determined that the type information of the predetermined page is the first type. If not, it may be determined that the type information corresponding to the media content is a second type. Accordingly, it may be determined that the type information of the predetermined page is the second type.

The predetermined condition comprises that the poster of the media content belongs to a predetermined poster set, and/or the media content or interaction information of the media content comprises a predetermined control corresponding to a predetermined target object.

Optionally, a poster set may be configured in advance, and a poster in the poster set may post media content associated with the target object. When the user enters the target object display page through a playback page of the media content posted by a poster in the poster set, and enters the live media streaming display interface through the livestream control, a part of interaction traffic of the media content of the poster may be transferred to the streamer end of the live media content, thus affecting the poster. If the user enters the target object display page through the playback page of the media content published by a poster that does not belong to the poster set, and enters the live media streaming display interface through the livestream control, the poster will not be affected.

Further, on the basis of any of the above embodiments, the step of displaying a livestream control of at least one piece of resource information corresponding to the target object in the target object display page in a display mode corresponding to the type information comprises:
when the type information corresponding to the media content is a first type, displaying a livestream control of at least one resource information corresponding to the target object in the target object display page in a first display mode;
when the type information corresponding to the media content is a second type, displaying the livestream control of the at least one resource information corresponding to the target object in the target object display page in a second display mode.

In this embodiment, when the type information corresponding to the media content is determined as the first type, the livestream control of the at least one resource information corresponding to the target object can be displayed in the target object display page in a first display mode corresponding to the first type. The first display mode may be an implicit display mode.

Optionally, when the type information corresponding to the media content is determined as the second type, the livestream control of the at least one resource information corresponding to the target object may be displayed on the target object display page in a second display mode corresponding to the second type. The second display mode may be an explicit display mode.

Further, on the basis of any of the foregoing embodiments, the displaying a livestream control of at least one resource information corresponding to the target object in the target object display page in a first display mode comprises:
when it is detected that the media content is of a first type, displaying a livestream prompt popup window in a predetermined area around at least one resource information corresponding to the target object in the target object display page.
where the displayed size of the livestream prompt popup window is smaller than that of the resource information.

In this embodiment, the first display mode may be an implicit display mode. When it is detected that the media content is of the first type, a livestream prompt popup window may be displayed in a predetermined area around the at least one resource information corresponding to the target object in the target object display page. Optionally, the livestream prompt popup window may be displayed above the resource information, and the displayed size of the livestream prompt popup window is smaller than the displayed size of the resource information.

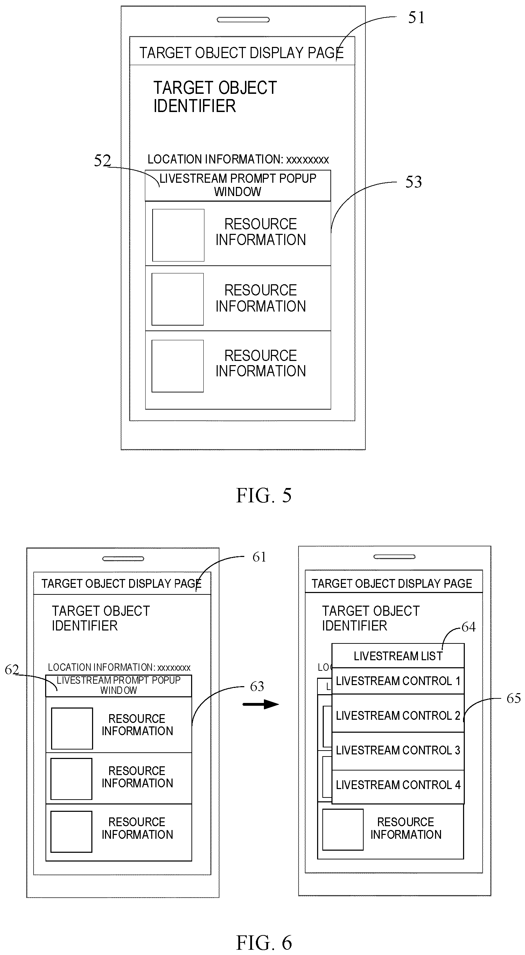

FIG. 5 is a schematic diagram of a display interface provided by an embodiment of the present disclosure. As shown in FIG. 5, at least one resource information 52 is displayed in a target object display page 51, and a livestream prompt popup window 53 may be displayed above the at least one resource information 52. The user may watch a live media streaming by triggering the livestream prompt popup window 53.

By displaying a livestream prompt popup window with a smaller size than resource information in a target object display page, display forms of livestream controls are enriched, the diversity of display content in the target object display page is increased, and the user experience is improved.

Further, on the basis of any of the above embodiments, after displaying a livestream prompt popup window in a predetermined area around the at least one resource information corresponding to the target object in the target object display page, the method further comprises:
in response to triggering of a user on the livestream prompt popup window, displaying a livestream list, the list comprising a livestream control corresponding to at least one resource information; in response to selecting by the user on a livestream control corresponding to the at least one resource information, redirecting to a live media streaming playback page corresponding to the resource information selected by the user; or
redirecting to a live media streaming page corresponding to the resource information corresponding to the target object in response to triggering by the user on the livestream prompt popup window.

In this embodiment, the livestream control may correspond to the resource information on a one-to-one basis, and the user may perform triggering on the livestream prompt popup window according to actual needs. In response to the triggering, a livestream list may be displayed, and the livestream list comprises a livestream control corresponding to the at least one resource information. In response to selecting by a user on a livestream control corresponding to the at least one resource information, a live media streaming display interface is redirected to, and live media content corresponding to the resource information selected by the user is played.

FIG. 6 is a schematic diagram of further interface interaction provided by an embodiment of the present disclosure. As shown in FIG. 6, a livestream prompt popup window 63 may be displayed above at least one resource information 62 on a target object display page 61. In response to triggering by the user on the livestream prompt popup window 63, a livestream list 64 may be displayed on the target object display page 61, where the livestream list 64 includes a livestream control 65 corresponding to at least one resource information. In response to triggering by the user on any livestream control 65, a live media streaming display interface 66 may be redirected to.

Optionally, after detecting the trigger operation of the user on the livestream prompt popup window, the live media streaming display interface may be redirected to, and live media content corresponding to the resource information corresponding to the target object is played.

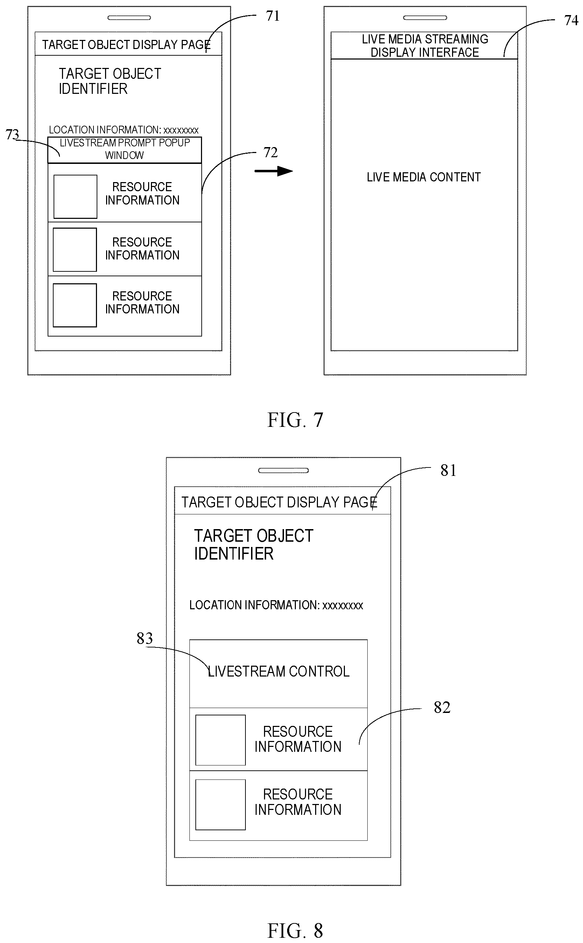

FIG. 7 is a schematic diagram of still further interface interaction provided by an embodiment of the present disclosure. As shown in FIG. 7, a livestream prompt popup window 73 may be displayed above at least one resource information 72 in a target object display page 71. In response to triggering by the user on the livestream prompt popup window 73, a live media streaming display interface 74 may be redirected to.

According to the method for displaying a page provided in this embodiment, when the type of a predetermined page is determined as a first type, a livestream control is displayed using a first display mode corresponding to the first type, so that the display form of the livestream control can be enriched, the diversity of display content in the target object display page can be increased, and the user experience can be improved.

Further, on the basis of any of the above embodiments, the displaying the livestream control of the at least one resource information corresponding to the target object on the target object display page in a second display mode when the type information corresponding to the media content is a second type comprises:
when it is detected that the media content is a second type, displaying a livestream control of at least one resource information corresponding to a target object in a resource information display area in the target object display page, where the displayed size of the livestream control of the at least one resource information is the same as that of the resource information.

In this embodiment, the second display mode may be an explicit display mode. Specifically, when it is determined that the type information corresponding to the media content is a second type, a livestream control of at least one resource information corresponding to the target object can be displayed in a resource information display area in the target object display page, where the displayed size of the livestream control of the at least one resource information is the same as that of the resource information. Thus, the user can more intuitively identify the livestream control in the target object display page, thereby watching the live media content.

FIG. 8 is a schematic diagram of a still further display interface provided by an embodiment of the present disclosure. As shown in FIG. 8, at least one resource information 82 and a livestream control 83 of the at least one resource information are displayed on a target object display page 81, where the livestream control 83 has the same displayed size as the resource information 82. The user may watch the live media streaming by triggering the livestream control 83.

Further, on the basis of any of the above embodiments, after the displaying a livestream control of at least one resource information corresponding to a target object in a resource information display area in the target object display page, the method further comprises:
in response to selecting by the user for a livestream control of the at least one resource information, redirecting to a live media streaming display interface corresponding to the livestream control of the resource information selected by the user.

In this embodiment, the user may perform triggering on the livestream control, and in response to the trigger operation, it is possible to redirect to the live media streaming display interface corresponding to the livestream control of the resource information selected by the user, and play the live media content corresponding to the resource information selected by the user.

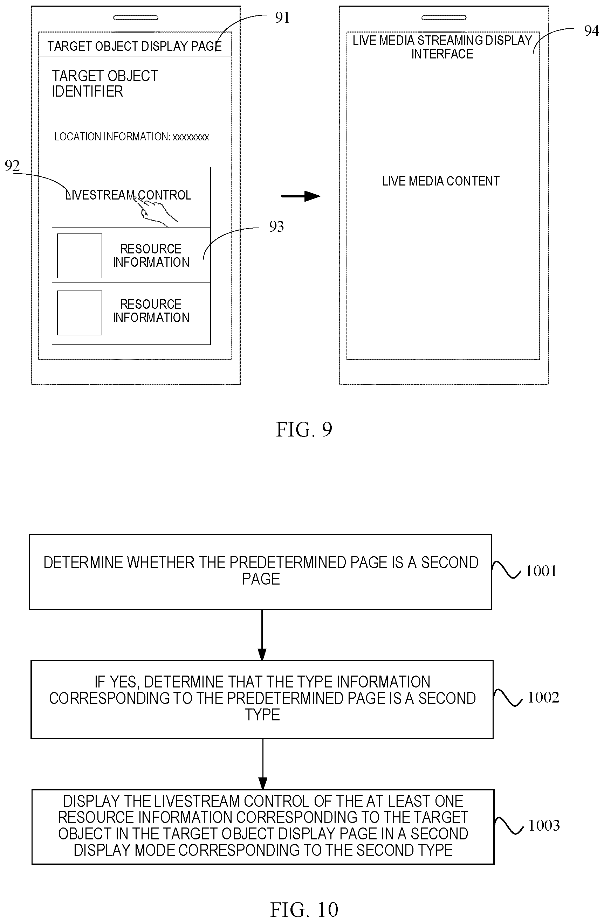

FIG. 9 is a schematic diagram of still further interface interaction provided by an embodiment of the present disclosure. As shown in FIG. 9, at least one resource information 92 and a livestream control 93 of the at least one resource information are displayed on a target object display page 91, and in response to triggering by the user on any the livestream control 93, it is possible to redirect to a live media streaming display interface 94 corresponding to the livestream control of the resource information selected by the user.

According to the method for displaying a page provided in this embodiment, when the type of a predetermined page is determined as a second type, a livestream control is explicitly displayed using a second display mode corresponding to the second type, so that the display form of the livestream control can be enriched, and the user can more intuitively identify the livestream control in the target object display page. The diversity of display content in the target object display page can be increased, and the user experience can be improved.

FIG. 10 is a schematic flowchart of a method for displaying a page provided by a further embodiment of the present disclosure. As shown in FIG. 10, the obtaining type information corresponding to a predetermined page comprises:

Step 1001, determining whether the predetermined page is a second page, where the second page is a search result display interface of the target object;

Step 1002, if yes, determining that the type information corresponding to the predetermined page is a second type;
the displaying a livestream control of at least one resource information corresponding to the target object on the target object display page in a display mode corresponding to the type information comprises:

Step 1003, displaying a livestream control of at least one resource information corresponding to the target object on the target object display page in a second display mode corresponding to the second type.

In this embodiment, first, it may be judged whether the predetermined page is a second page, where the second page is a search result display interface of the target object. In practical applications, the user may perform a search operation on a target object, and according to the search operation of the user, a search result display interface may be redirected to, where the search result display interface includes at least one search result corresponding to the target object. It can be understood that the search result display interface may be an interface obtained after the user inputs a search word, or may also be other target object list page, for example, a target object list page obtained by classification.

If it is determined that the predetermined page is the second page, it may be determined that the type information corresponding to the predetermined page is a second type. Accordingly, the livestream control of the at least one resource information corresponding to the target object may be displayed in the target object display page in a second display mode corresponding to the second type.

Further, on the basis of any of the above embodiments, the displaying a livestream control of at least one resource information corresponding to the target object in the target object display page in a second display mode corresponding to the second type may comprise:
displaying the livestream control of the at least one resource information corresponding to the target object in a resource information display area in the target object display page, where the displayed size of the livestream control of the at least one resource information is the same as that of the resource information.

In this embodiment, the second display mode may be an explicit display mode. Specifically, when it is determined that the type information corresponding to the predetermined page is a second type, a livestream control of at least one resource information corresponding to the target object can be displayed in a resource information display area in the target object display page, where the displayed size of the livestream control of the at least one resource information is the same as that of the resource information. Thus, the user can more intuitively identify the livestream control in the target object display page, thereby watching the live media content.

Further, on the basis of any of the above embodiments, after the displaying the livestream control of the at least one resource information corresponding to the target object in the resource information display area in the target object display page, the method further comprises:
in response to a selection by the user for the livestream control of the at least one resource information, redirecting to a live media streaming display interface corresponding to the livestream control of the resource information selected by the user.

In this embodiment, the user may perform triggering on the livestream control, and in response to the trigger operation, it is possible to redirect to the live media streaming display interface corresponding to the livestream control of the resource information selected by the user, and play the live media content corresponding to the resource information selected by the user.

According to the method for displaying a page provided in this embodiment, when the type of a predetermined page is determined as a second type, a livestream control is explicitly displayed using a second display mode corresponding to the second type, so that the display form of the livestream control can be enriched, and the user can more intuitively identify the livestream control in the target object display page.

Further, on the basis of any of the foregoing embodiments, after Step 102, the method further comprises:
in response to switching by the user for media content being currently played, switching to next live media content.

In this embodiment, the live media streaming includes at least one live media content associated with the resource information or the target object. Therefore, after the live media streaming display interface is redirected to, the user may perform a switch operation on the currently displayed live media content according to actual needs. Accordingly, in response to the switch operation of the user on the currently played live media content, next live media content is switched to.

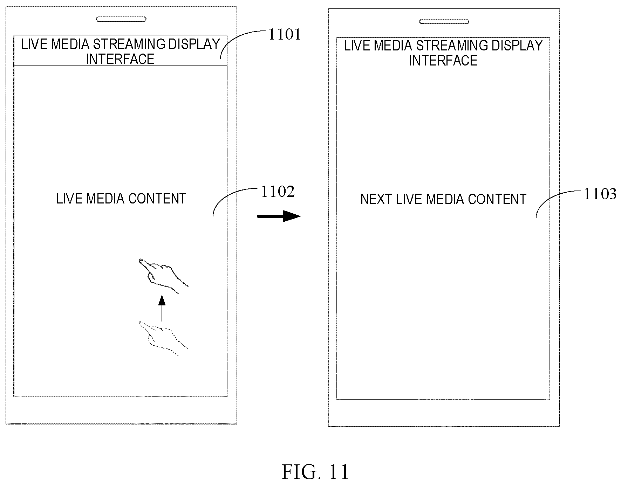

FIG. 11 is a schematic diagram of still further interface interaction provided by an embodiment of the present disclosure. Live media content 1102 corresponding to a livestream control with resource information selected by a user may be displayed in a live media stream display interface 1101, and in response to a switch operation performed by the user on the live media content 1102, the live media content can be switched to next live media content 1103.

Further, on the basis of any of the above embodiments, after the switching to the next live media content in response to the switch operation of the user on the currently played live media content, the method further comprises:
displaying prompt information on the live media content play interface upon detecting that the count that the user triggers the switch operation exceeds a predetermined count threshold, where the count threshold is the number of livestream broadcast media content that can be played currently.

In this embodiment, the number of live media content that can be played currently in the live media streaming display interface may be predetermined, and the predetermined number is determined as the count threshold. While the user browses live media content, the count of switch operations performed by the user on the live media content can be monitored, and when it is detected that the count of switch operations exceeds the count threshold, prompt information is displayed on the live media content play interface, where the prompt information is used for prompting that the live media content being played currently is the last live media content.

According to the method for displaying a page provided in this embodiment, the currently played live media content is switched according to a switch operation of the user, so that the user can watch more content of the target object on the live media content play interface, thereby improving the user's understanding of the target object.

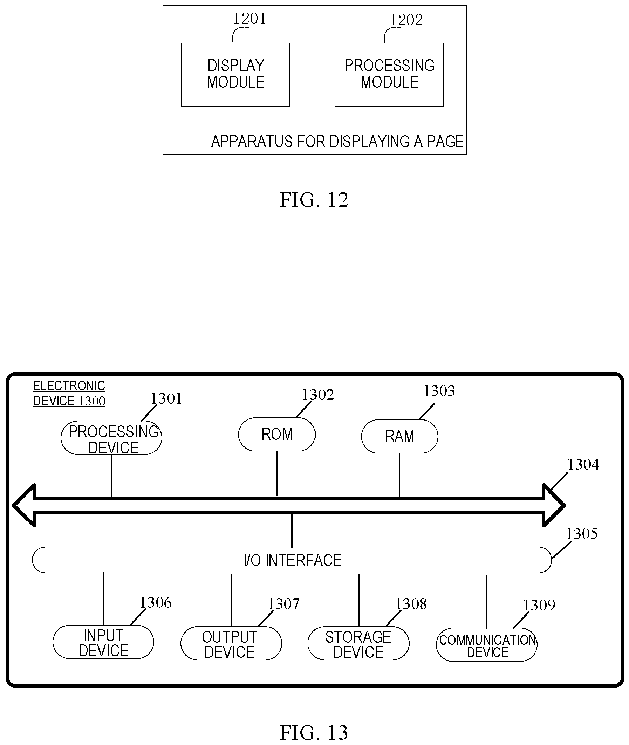

FIG. 12 is a structural schematic diagram of an apparatus for displaying a page provided by an embodiment of the present disclosure. As shown in FIG. 12, the apparatus comprises: a display module 1201 and a processing module 1202. The display module 1201 is configured for displaying a livestream control associated with at least one resource information corresponding to a target object on a target object display page. The processing module 1202 is configured for in response to triggering by a user on the livestream control, displaying a live media streaming display interface corresponding to the resource information, where the live media streaming comprises at least one live media content associated with the resource information and/or the target object.

Further, on the basis of the foregoing embodiment, the livestream control comprises a static icon and/or a dynamic icon, where a resource information picture and/or a livestream content screenshot corresponding to the target object are displayed on the static icon, and at least a part of livestream content corresponding to the target object is displayed on the dynamic icon.

Further, based on any one of the foregoing embodiments, the apparatus further comprises: a determining module configured for determining at least one live media content associated with the resource information and/or the target object; and a ranking module, configured for ranking the at least one live media content based on an attribute of the live media content and/or an associated relationship between the live media content and the user, to generate the live media streaming.

Further, on the basis of any of the foregoing embodiments, the display module is configured for obtaining type information corresponding to a predetermined page and display a livestream control of at least one resource information corresponding to the target object in the target object display page in a display mode corresponding to the type information, where the target object display page is redirected to based on triggering by the user on an entry of a target object display page within the predetermined page.

Further, on the basis of any of the foregoing embodiments, the display module is configured for: determining whether the predetermined page is a first page, where the first page is a media content playback interface; if yes, in response to triggering by the user on an entry of the target object display page within the first page, determining type information corresponding to media content currently played in the first page, and determining the type information corresponding to the media content currently played in the first page as the type information corresponding to the predetermined page.

Further, based on any one of the foregoing embodiments, the display module is configured for: obtaining the media content currently played and associated information corresponding to the media content, where the associated information comprises at least one of interaction information and poster information of the media content; detecting whether the media content and the associated information corresponding to the media content satisfy a predetermined condition; if yes, determining that the type information corresponding to the media content is a first type; if not, determining that the type information corresponding to the media content is a second type.

Further, on the basis of any of the foregoing embodiments, the display module is configured for displaying the livestream control of the at least one resource information corresponding to the target object in the target object display page in a first display mode when the type information corresponding to the media content is the first type; and displaying the livestream control of the at least one resource information corresponding to the target object in the target object display page in a second display mode when the type information corresponding to the media content is the second type.

Further, on the basis of any one of the foregoing embodiments, the predetermined condition comprises that a poster of the media content belongs to a predetermined poster set, and/or the media content or the interaction information of the media content comprises a predetermined control corresponding to a predetermined target object.

Further, on the basis of any of the foregoing embodiments, the display module is configured for displaying a livestream prompt popup window in a predetermined area around the at least one resource information corresponding to the target object within the target object display page upon detecting that the media content is of a first type, where the displayed size of the livestream prompt popup window is smaller than that of the resource information.

Further, on the basis of any of the foregoing embodiments, the display module is configured for displaying a livestream list in response to triggering by the user on the livestream prompt popup window, the livestream list comprising a livestream control corresponding to at least one resource information; and in response to selecting by the user for a livestream control corresponding to the at least one resource information, redirecting to a live media streaming playback page corresponding to resource information selected by the user; or in response to triggering by the user on the livestream prompt popup window, redirecting to a live media streaming page corresponding to resource information corresponding to the target object.

Further, on the basis of any one of the foregoing embodiments, the display module is configured for displaying a livestream control of at least one resource information corresponding to a target object in a resource information display area in the target object display page upon detecting that the media content is of a second type, where the displayed size of the livestream control of the at least one resource information is the same as that of the resource information.

Further, on the basis of any of the foregoing embodiments, the display module is configured for, in response to selecting by the user for the livestream control of the at least one resource information, redirecting to a live media streaming display interface corresponding to the livestream control of the resource information selected by the user.

Further, on the basis of any of the foregoing embodiments, the display module is configured for: determining whether the predetermined page is a second page, where the second page is a search result display interface of the target object; if yes, determining that the type information corresponding to the predetermined page is a second type; the displaying the livestream control of the at least one resource information corresponding to the target object in the target object display page in a display mode corresponding to the type information comprises: displaying the livestream control of the at least one resource information corresponding to the target object in the target object display page in a second display mode corresponding to the second type.

Further, on the basis of any of the foregoing embodiments, the display module is configured for: displaying a livestream control of at least one resource information corresponding to the target object in a resource information display area in the target object display page, where the displayed size of the livestream control of the at least one resource information is the same as that of the resource information.

Further, on the basis of any of the foregoing embodiments, the display module is configured for: in response to selecting by the user for the livestream control of the at least one resource information, redirecting to a live media streaming display interface corresponding to the livestream control of the resource information selected by the user.

Further, on the basis of any of the foregoing embodiments, the apparatus further comprises: a switch module, configured for switching to next live media content in response to switching by the user for the currently played live media content.

Further, on the basis of any of the foregoing embodiments, the apparatus further comprises: a prompt module, configured for displaying prompt information on the live media content playback interface upon detecting that the count that the user triggers the switch operation exceeds a predetermined count threshold, where the count threshold is the number of live media content that can be played currently.

The device provided in this embodiment may be used to perform the technical solutions of the foregoing method embodiments, with similar implementation principles and technical effects, which are not repeated here.

In order to achieve the foregoing embodiments, an electronic device is further provided, comprising: a processor and a memory;
the memory storing computer executable instructions;
the computer executable instructions stored in the memory, when executed by the processor, causing the processor to perform a method for displaying a page as described in any of the foregoing embodiments.

FIG. 13 is a structural schematic diagram of an electronic device 1300 provided by an embodiment of the present disclosure. The electronic device 1300 can be a terminal device or a server. The terminal device may include, without limitation to, a mobile terminal such as a mobile phone, a notebook computer, a digital broadcast receiver, a personal digital assistant (PDA), a portable Android device (PAD), a portable multimedia player (PMP), an on-board terminal (e.g., an on-board navigation terminal) and the like, as well as a fixed terminal such as digital TV, a desktop computer and the like. The electronic device shown in FIG. 13 is merely an example and should not be construed as bringing any restriction on the functionality and usage scope of the embodiments of the present disclosure.

As shown in FIG. 13, the electronic device 1300 may comprise a processing unit (e.g., a central processor, a graphics processor) 1301 which is capable of performing various appropriate actions and processes to realize the method of table processing as described in the embodiments of the present disclosure in accordance with programs stored in a read only memory (ROM) 1302 or programs loaded from a storage unit 908 to a random access memory (RAM) 1303. In the RAM 1303, there are also stored various programs and data required by the electronic device 1300 when operating. The processing unit 1301, the ROM 1302 and the RAM 1303 are connected to one another via a bus 1304. An input/output (I/O) interface 1305 is also connected to the bus 1304.

Usually, the following units may be connected to the I/O interface 1305: an input unit 1306 including a touch screen, a touch pad, a keyboard, a mouse, a camera, a microphone, an accelerometers, a gyroscope, or the like; an output unit 1307, such as a liquid-crystal display (LCD), a loudspeaker, a vibrator, or the like; a storage unit 1308, such as a a magnetic tape, a hard disk or the like; and a communication unit 1309. The communication unit 1309 allows the electronic device 1300 to perform wireless or wired communication with other device so as to exchange data with other device. While FIG. 13 shows the electronic device 1300 with various units, it should be understood that it is not required to implement or have all of the illustrated units. Alternatively, more or less units may be implemented or exist.

Specifically, according to the embodiments of the present disclosure, the procedures described with reference to the flowchart may be implemented as computer software programs. For example, the embodiments of the present disclosure comprise a computer program product that comprises a computer program embodied on a non-transitory computer-readable medium, the computer program including program codes for executing the method shown in the flowchart. In such an embodiment, the computer program may be loaded and installed from a network via the communication unit 1309, or installed from the storage unit 1308, or installed from the ROM 1302. The computer program, when executed by the processing unit 1301, perform the above functions defined in the method of the embodiments of the present disclosure.

It is noteworthy that the computer readable medium of the present disclosure can be a computer readable signal medium, a computer readable storage medium or any combination thereof. The computer readable storage medium may be, for example, but is not limited to, an electronic, magnetic, optical, electromagnetic, infrared or semiconductor system, apparatus or device, or any combination of the foregoing. More specific examples of the computer readable storage medium may include, without limitation to, the following: an electrical connection with one or more conductors, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the present disclosure, the computer readable storage medium may be any tangible medium containing or storing a program which may be used by an instruction executing system, apparatus or device or used in conjunction therewith. In the present disclosure, the computer readable signal medium may include a data signal propagated in baseband or as part of a carrier wave, with computer readable program code carried therein. The data signal propagated as such may take various forms, including without limitation to, an electromagnetic signal, an optical signal or any suitable combination of the foregoing. The computer readable signal medium may further be any other computer readable medium than the computer readable storage medium, which computer readable signal medium may send, propagate or transmit a program used by an instruction executing system, apparatus or device or used in conjunction with the foregoing. The program code included in the computer readable medium may be transmitted using any suitable medium, including without limitation to, an electrical wire, an optical fiber cable, RF (radio frequency), etc., or any suitable combination of the foregoing.

The above computer readable medium may be included in the above-mentioned electronic device; and it may also exist alone without being assembled into the electronic device.

The computer readable medium carries one or more programs which, when executed by the electronic device, cause the electronic device to perform the method described in the above embodiments.

Computer program codes for carrying out operations of the present disclosure may be written in one or more programming languages, including without limitation to, an object oriented programming language such as Java, Smalltalk, C++ or the like, and conventional procedural programming languages, such as the "C" programming language or similar programming languages. The program codes may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

A further embodiment of the present disclosure provides a computer readable storage medium, storing computer executable instructions thereon. The computer executable instructions, when executed by a processor, implement a method for displaying a page as described in any of the foregoing embodiments.

A further embodiment of the present disclosure provides a computer program product, comprising a computer program. The computer program, when executed by a processor, implements a method for displaying a page as described in any of the foregoing embodiments.

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units described in the embodiments of the present disclosure may be implemented as software or hardware, where the name of a unit does not form any limitation to the unit per se in some case. For example, the first obtaining unit may be further described as a "unit configured for obtaining at least two Internet protocol addresses".

The functions described above may be executed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In the context of the present disclosure, the machine readable medium may be a tangible medium, which may include or store a program used by an instruction executing system, apparatus or device or used in conjunction with the foregoing. The machine readable medium may be a machine readable signal medium or a machine readable storage medium. The machine readable medium may include, but is not limited to, an electronic, magnetic, optical, electromagnetic, infrared, semiconductor system, means or device, or any suitable combination of the foregoing. More specific examples of the machine readable storage medium include the following: an electric connection with one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

In a first aspect, according to one or more embodiments of the present disclosure, a method for displaying a page is provided, comprising:
displaying a livestream control associated with at least one resource information corresponding to a target object in a target object display page; and
in response to triggering by a user on the livestream control, displaying a live media streaming display interface corresponding to the resource information, where a live media streaming comprises at least one live media content associated with the resource information and/or the target object.

According to one or more embodiments of the present disclosure, the displaying a livestream control associated with at least one resource information corresponding to a target object in a target object display page comprises:
obtaining type information corresponding to a predetermined page and displaying a livestream control of at least one resource information corresponding to the target object in the target object display page in a display mode corresponding to the type information, where the target object display page is redirected to based on triggering by the user on an entry of a target object display page within the predetermined page.

According to one or more embodiments of the present disclosure, the obtaining type information corresponding to a predetermined page comprises:
determining whether the predetermined page is a first page, where the first page is a media content playback interface;
in response to the predetermined page being the first page and in response to triggering by the user on the entry of the target object display page within the first page, determining type information corresponding to media content currently played in the first page, and determining the type information corresponding to the media content currently played in the first page as the type information corresponding to the predetermined page.

According to one or more embodiments of the present disclosure, the determining the type information corresponding to the media content currently played in the first page comprises:
obtaining the media content currently played and associated information corresponding to the media content, where the associated information comprises at least one of interaction information and poster information of the media content;
detecting whether the media content and the associated information corresponding to the media content satisfy a predetermined condition;
in response to the media content and the associated information corresponding to the media content satisfying the predetermined condition, determining that the type information corresponding to the media content is a first type;
in response to the media content and the associated information corresponding to the media content dissatisfying the predetermined condition, determining that the type information corresponding to the media content is a second type.

According to one or more embodiments of the present disclosure, the displaying the livestream control of the at least one resource information corresponding to the target object in the target object display page in a display mode corresponding to the type information comprises:
in response to the type information corresponding to the media content being the first type, displaying the livestream control of the at least one resource information corresponding to the target object in the target object display page in a first display mode; and
in response to the type information corresponding to the media content being the second type, displaying the livestream control of the at least one resource information corresponding to the target object in the target object display page in a second display mode.

According to one or more embodiments of the present disclosure, the predetermined condition comprises that a poster of the media content belongs to a predetermined poster set, and/or the media content or the interaction information of the media content comprises a predetermined control corresponding to a predetermined target object.

According to one or more embodiments of the present disclosure, in response to the type information corresponding to the media content being the first type, displaying the livestream control of the at least one resource information corresponding to the target object in the target object display page in the first display mode comprises:
in response to detecting that the media content being the first type, displaying a livestream prompt popup window in a predetermined area around the at least one resource information corresponding to the target object within the target object display page,
where the displayed size of the livestream prompt popup window is smaller than that of the resource information.

According to one or more embodiments of the present disclosure, after the displaying a livestream prompt popup window in a predetermined area around the at least one resource information corresponding to the target object within the target object display page, there is further comprised: in response to triggering by the user on the livestream prompt popup window, displaying a livestream list, the livestream list comprising the livestream control corresponding to the at least one resource information; and in response to selecting by the user for a livestream control corresponding to the at least one resource information, redirecting to a live media streaming playback page corresponding to resource information selected by the user; or in response to triggering by the user on the livestream prompt popup window, redirecting to a live media streaming page corresponding to resource information corresponding to the target object.

According to one or more embodiments of the present disclosure, in response to the type information corresponding to the media content being the first type, displaying the livestream control of the at least one resource information corresponding to the target object in the target object display page in the second display mode comprises:
in response to detecting that the media content being the second type, displaying the livestream control of the at least one resource information corresponding to the target object in a resource information display area in the target object display page, where a displayed size of the livestream control of the at least one resource information is the same as that of the resource information.

According to one or more embodiments of the present disclosure, after the displaying a livestream control of at least one resource information corresponding to a target object in a resource information display area in the target object display page, there is further comprised:
in response to selecting by the user for the livestream control of the at least one resource information, redirecting to a live media streaming display interface corresponding to the livestream control of the resource information selected by the user.

According to one or more embodiments of the present disclosure, the obtaining type information corresponding to a predetermined page comprises:
determining whether the predetermined page is a second page, where the second page is a search result display interface of the target object;
in response to the predetermined page being the second page, determining that the type information corresponding to the predetermined page is a second type;
the displaying the livestream control of the at least one resource information corresponding to the target object in the target object display page in a display mode corresponding to the type information comprises:
displaying the livestream control of the at least one resource information corresponding to the target object in the target object display page in a second display mode corresponding to the second type.

According to one or more embodiments of the present disclosure, the displaying the livestream control of the at least one resource information corresponding to the target object in the target object display page in a second display mode corresponding to the second type comprises:
displaying a livestream control of at least one resource information corresponding to the target object in a resource information display area in the target object display page, where the displayed size of the livestream control of the at least one resource information is the same as that of the resource information.

According to one or more embodiments of the present disclosure, after the displaying a livestream control of at least one resource information corresponding to a target object in a resource information display area in the target object display page, there is further comprised:
in response to selecting by the user for the livestream control of the at least one resource information, redirecting to a live media streaming display interface corresponding to the livestream control of the resource information selected by the user.

According to one or more embodiments of the present disclosure, the livestream control comprises a static icon and/or a dynamic icon;,
where a resource information picture and/or a livestream content screenshot corresponding to the target object are displayed on the static icon, and at least a part of livestream content corresponding to the target object is displayed on the dynamic icon.

According to one or more embodiments of the present disclosure, before the displaying a live media streaming display interface corresponding to the resource information, there is further comprised:
determining at least one live media content associated with the resource information and/or the target object; and
ranking the at least one live media content based on an attribute of the live media content and/or an associated relationship between the live media content and the user, to generate the live media streaming.

According to one or more embodiments of the present disclosure, after in response to the triggering by the user on the livestream control, displaying the live media streaming display interface corresponding to the resource information, there is further comprised:
in response to switching by the user for currently played live media content, switching to next live media content.

According to one or more embodiments of the present disclosure, after the displaying a live media streaming display interface corresponding to the resource information, there is further comprised:
displaying prompt information on the live media content playback interface upon detecting that the count that the user triggers the switch operation exceeds a predetermined count threshold;
where the count threshold is the number of live media content that can be played currently.

In a second aspect, according to one or more embodiments of the present disclosure, an apparatus for displaying a page is provided, comprising:
a display module configured for displaying a livestream control associated with at least one resource information corresponding to a target object in a target object display page; and
a processing module configured for displaying a live media streaming display interface corresponding to the resource information in response to triggering of a user on the livestream control, where the live media streaming comprises at least one live media content associated with the resource information and/or the target object.

According to one or more embodiments of the present disclosure, the display module is configured for:
obtaining type information corresponding to a predetermined page and displaying a livestream control of at least one resource information corresponding to the target object in the target object display page in a display mode corresponding to the type information, where the target object display page is redirected to based on triggering by the user on an entry of a target object display page within the predetermined page.

According to one or more embodiments of the present disclosure, the display module is configured for:
determining whether the predetermined page is a first page, where the first page is a media content playback interface;
if yes, in response to triggering by the user on an entry of the target object display page within the first page, determining type information corresponding to media content currently played in the first page, and determining the type information corresponding to the media content currently played in the first page as the type information corresponding to the predetermined page.

According to one or more embodiments of the present disclosure, the display module is configured for:
obtaining the media content currently played and associated information corresponding to the media content, where the associated information comprises at least one of interaction information and poster information of the media content;
detecting whether the media content and the associated information corresponding to the media content satisfy a predetermined condition;
if yes, determining that the type information corresponding to the media content is a first type;
if not, determining that the type information corresponding to the media content is a second type.

According to one or more embodiments of the present disclosure, the display module is configured for:
displaying the livestream control of the at least one resource information corresponding to the target object in the target object display page in a first display mode when the type information corresponding to the media content is the first type; and
displaying the livestream control of the at least one resource information corresponding to the target object in the target object display page in a second display mode when the type information corresponding to the media content is the second type.

According to one or more embodiments of the present disclosure, the predetermined condition comprises that a poster of the media content belongs to a predetermined poster set, and/or the media content or the interaction information of the media content comprises a predetermined control corresponding to a predetermined target object.

According to one or more embodiments of the present disclosure, the display module is configured for:
displaying a livestream prompt popup window in a predetermined area around the at least one resource information corresponding to the target object within the target object display page upon detecting that the media content is of a first type,
where the displayed size of the livestream prompt popup window is smaller than that of the resource information.

According to one or more embodiments of the present disclosure, the display module is configured for:
displaying a livestream list in response to triggering by the user on the livestream prompt popup window, the livestream list comprising a livestream control corresponding to at least one resource information; and
in response to selecting by the user for a livestream control corresponding to the at least one resource information, redirecting to a live media streaming playback page corresponding to resource information selected by the user; or
in response to triggering by the user on the livestream prompt popup window, redirecting to a live media streaming page corresponding to resource information corresponding to the target object.

According to one or more embodiments of the present disclosure, the display module is configured for:
displaying a livestream control of at least one resource information corresponding to a target object in a resource information display area in the target object display page upon detecting that the media content is of a second type, where the displayed size of the livestream control of the at least one resource information is the same as that of the resource information.

According to one or more embodiments of the present disclosure, the display module is configured for:
in response to selecting by the user for the livestream control of the at least one resource information, redirecting to a live media streaming display interface corresponding to the livestream control of the resource information selected by the user.

According to one or more embodiments of the present disclosure, the display module is configured for:
determining whether the predetermined page is a second page, where the second page is a search result display interface of the target object;
if yes, determining that the type information corresponding to the predetermined page is a second type;
the displaying the livestream control of the at least one resource information corresponding to the target object in the target object display page in a display mode corresponding to the type information comprises:
displaying the livestream control of the at least one resource information corresponding to the target object in the target object display page in a second display mode corresponding to the second type.

According to one or more embodiments of the present disclosure, the display module is configured for:
displaying a livestream control of at least one resource information corresponding to the target object in a resource information display area in the target object display page, where the displayed size of the livestream control of the at least one resource information is the same as that of the resource information.

According to one or more embodiments of the present disclosure, the display module is configured for:
in response to selecting by the user for the livestream control of the at least one resource information, redirecting to a live media streaming display interface corresponding to the livestream control of the resource information selected by the user.

According to one or more embodiments of the present disclosure, the livestream control comprises a static icon and/or a dynamic icon;
where a resource information picture and/or a livestream content screenshot corresponding to the target object are displayed on the static icon, and at least a part of livestream content corresponding to the target object is displayed on the dynamic icon.

According to one or more embodiments of the present disclosure, the apparatus further comprises:
a determining module configured for determining at least one live media content associated with the resource information and/or the target object; and
a ranking module configured for ranking the at least one live media content based on an attribute of the live media content and/or an associated relationship between the live media content and the user, to generate the live media streaming.

According to one or more embodiments of the present disclosure, the apparatus further comprises:
a switch module configured for switching to next live media content in response to switching by the user for the currently played live media content.

According to one or more embodiments of the present disclosure, the apparatus further comprises:
a prompt module configured for displaying prompt information on the live media content playback interface upon detecting that the count that the user triggers the switch operation exceeds a predetermined count threshold;
where the count threshold is the number of live media content that can be played currently.

In a third aspect, according to one or more embodiments of the present disclosure, an electronic device is provided, comprising: at least one processor and a memory;
the memory storing computer-executed instructions;
the at least one processor executing the computer-executed instructions stored in the memory to cause the at least one processor to perform a method for displaying a page according to the first aspect and various possible designs of the first aspect.

In a fourth aspect, according to one or more embodiments of the present disclosure, a computer readable storage medium is provided, storing computer-executed instructions thereon. The computer-executed instructions, when executed by a processor, implement a method for displaying a page according to the first aspect and various possible designs of the first aspect.

In a fifth aspect, according to one or more embodiments of the present disclosure, a computer program product is provided, comprising a computer program which, when executed by a processor, implements a method for displaying a page according to the first aspect and various possible designs of the first aspect.

In a sixth aspect, according to one or more embodiments of the present disclosure, a computer program is provided which, when executed by a processor, implements a method for displaying a page according to the first aspect and various possible designs of the first aspect.

The foregoing description merely illustrates the preferable embodiments of the present disclosure and used technical principles. Those skilled in the art should understand that the scope of the present disclosure is not limited to technical solutions formed by specific combinations of the foregoing technical features and also cover other technical solution formed by any combinations of the foregoing or equivalent features without departing from the concept of the present disclosure, such as a technical solution formed by replacing the foregoing features with the technical features disclosed in the present disclosure (but not limited to) with similar functions.

In addition, although various operations are depicted in a particular order, this should not be construed as requiring that these operations be performed in the particular order shown or in a sequential order. In a given environment, multitasking and parallel processing may be advantageous. Likewise, although the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or method logical acts, it is to be understood that the subject matter defined in the appended claims is not necessarily limited to the specific features or acts described above. On the contrary, the specific features and acts described above are merely example forms of implementing the claims.

## Claims

1. A method of displaying a page, comprising:
displaying a livestream control associated with at least one resource information corresponding to a target object in a target object display page; and
in response to triggering by a user on the livestream control, displaying a live media streaming display interface corresponding to the resource information, wherein live media streaming comprises at least one live media content associated with the resource information and/or the target object.

2. The method of claim 1, wherein displaying the livestream control associated with the at least one resource information corresponding to the target object in the target object display page comprises:
obtaining type information corresponding to a predetermined page and displaying a livestream control of at least one resource information corresponding to the target object in the target object display page in a display mode corresponding to the type information, wherein the target object display page is redirected to based on triggering by the user on an entry of the target object display page within the predetermined page.

3. The method of claim 2, wherein obtaining the type information corresponding to the predetermined page comprises:
determining whether the predetermined page is a first page, wherein the first page is a media content playback interface; and
in response to the predetermined page being the first page and in response to triggering by the user on the entry of the target object display page within the first page, determining type information corresponding to media content currently played in the first page, and determining the type information corresponding to the media content currently played in the first page as the type information corresponding to the predetermined page.

4. The method of claim 3, wherein determining the type information corresponding to the media content currently played in the first page comprises:
obtaining the media content currently played and associated information corresponding to the media content, wherein the associated information comprises at least one of interaction information and poster information of the media content;
detecting whether the media content and the associated information corresponding to the media content satisfies a predetermined condition;
in response to the media content and the associated information corresponding to the media content satisfying the predetermined condition, determining that the type information corresponding to the media content is a first type;
in response to the media content and the associated information corresponding to the media content dissatisfying the predetermined condition, determining that the type information corresponding to the media content is a second type.

5. The method of any claims 2 to 4, wherein displaying the livestream control of the at least one resource information corresponding to the target object in the target object display page in the display mode corresponding to the type information comprises:
in response to the type information corresponding to the media content being the first type, displaying the livestream control of the at least one resource information corresponding to the target object in the target object display page in a first display mode; and
in response to the type information corresponding to the media content being the second type, displaying the livestream control of the at least one resource information corresponding to the target object in the target object display page in a second display mode.

6. The method of claim 4 or 5, wherein the predetermined condition comprises a condition that a poster of the media content belongs to a predetermined poster set, and/or the media content or the interaction information of the media content comprises a predetermined control corresponding to a predetermined target object.

7. The method of claim 5 or 6, wherein in response to the type information corresponding to the media content being the first type, displaying the livestream control of the at least one resource information corresponding to the target object in the target object display page in the first display mode comprises:
in response to detecting that the media content being the first type, displaying a livestream prompt popup window in a predetermined area around the at least one resource information corresponding to the target object within the target object display page,
wherein a displayed size of the livestream prompt popup window is smaller than that of the resource information.

8. The method of claim 7, wherein after displaying the livestream prompt popup window in the predetermined area around the at least one resource information corresponding to the target object within the target object display page, further comprising:
in response to triggering by the user on the livestream prompt popup window, displaying a livestream list, the livestream list comprising the livestream control corresponding to the at least one resource information; and
in response to selecting by the user for a livestream control corresponding to the at least one resource information, redirecting to a live media streaming playback page corresponding to the resource information selected by the user; or in response to triggering by the user on the livestream prompt popup window, redirecting to a live media streaming page corresponding to the resource information corresponding to the target object.

9. The method of claim 5 or 6, wherein in response to the type information corresponding to the media content being the first type, displaying the livestream control of the at least one resource information corresponding to the target object in the target object display page in the second display mode comprises:
in response to detecting that the media content being the second type, displaying the livestream control of the at least one resource information corresponding to the target object in a resource information display area in the target object display page, wherein a displayed size of the livestream control of the at least one resource information is the same as that of the resource information.

10. The method of claim 9, wherein after displaying the livestream control of the at least one resource information corresponding to the target object in the resource information display area in the target object display page, further comprising:
in response to selecting by the user for the livestream control of the at least one resource information, redirecting to the live media streaming display interface corresponding to the livestream control of the resource information selected by the user.

11. The method of claim 2, wherein obtaining the type information corresponding to the predetermined page comprises:
determining whether the predetermined page is a second page, wherein the second page is a search result display interface of the target object;
in response to the predetermined page being the second page, determining that the type information corresponding to the predetermined page is a second type;
displaying the livestream control of the at least one resource information corresponding to the target object in the target object display page in the display mode corresponding to the type information comprises:
displaying the livestream control of the at least one resource information corresponding to the target object in the target object display page in a second display mode corresponding to the second type.

12. The method of claim 11, wherein displaying the livestream control of the at least one resource information corresponding to the target object in the target object display page in the second display mode corresponding to the second type comprises:
displaying the livestream control of the at least one resource information corresponding to the target object in a resource information display area in the target object display page, wherein a displayed size of the livestream control of the at least one resource information is the same as that of the resource information.

13. The method of claim 12, wherein after displaying the livestream control of the at least one resource information corresponding to the target object in the resource information display area in the target object display page, further comprising:
in response to selecting by the user for the livestream control of the at least one resource information, redirecting to the live media streaming display interface corresponding to the livestream control of the resource information selected by the user.

14. The method of any of claims 1 to 13, wherein the livestream control comprises a static icon and/or a dynamic icon;
wherein a resource information picture and/or a livestream content screenshot corresponding to the target object is displayed on the static icon, and at least a part of livestream content corresponding to the target object is displayed on the dynamic icon.

15. The method of any of claims 1 to 14, wherein before displaying the live media streaming display interface corresponding to the resource information, further comprising:
determining at least one live media content associated with the resource information and/or the target object; and
ranking the at least one live media content based on an attribute of the live media content and/or an associated relationship between the live media content and the user, to generate the live media streaming.

16. The method of any of claims 1 to 15, wherein after in response to the triggering by the user on the livestream control, displaying the live media streaming display interface corresponding to the resource information, further comprising:
in response to switching by the user for currently played live media content, switching to next live media content.

17. An apparatus for displaying a page, comprising:
a display module configured for displaying a livestream control associated with at least one resource information corresponding to a target object in a target object display page; and
a processing module configured for in response to triggering by a user on the livestream control, displaying a live media streaming display interface corresponding to the resource information, wherein the live media streaming comprises at least one live media content associated with the resource information and/or the target object.

18. An electronic device, comprising:
a processor and a memory;
the memory storing computer-executed instructions;
the processor executing the computer-executed instructions stored in the memory to cause the processor to implement the method of displaying a page according to any of claims 1 to 16.

19. A computer readable storage medium storing computer-executed instructions which, when executed by a processor, implement the method for displaying a page of any of claims 1 to 16.

20. A computer program product, comprising a computer program, wherein the computer program, when executed by a processor, implements the method for displaying a page of any of claims 1 to 16.

21. A computer program, wherein the computer program, when executed by a processor, implements the method for displaying a page of any of claims 1 to 16.
